# EUROPEAN PATENT APPLICATION

(11) **EP 2 899 173 A1**
(43) Date of publication of application: **29.07.2015**
(21) Application number: 14152933.9
(22) Date of filing: 28.01.2014
(51) Int. Cl.: C04B 28/00, C04B 28/02, C04B 28/14, C04B 40/00

(54) **Wood extract as plasticizer for mineral binders**

(71) Applicant: Sika Technology AG, 6340 Baar (CH); Sika Poland Sp. z o.o., 02-871 Warszawa (PL)
(72) Inventor: Jawanski, Witold, 32-400 Myslenice (PL)
(74) Representative: Sika Patent Attorneys

(57) **Abstract**

The present invention describes the use of a wood extract as a plasticizer for a composition comprising a mineral binder, wherein the wood extract is obtainable by water and/or steam extraction, and the corresponding composition comprising the mineral binder and the wood extract as a plasticizer.

## Description

### Technical field

The invention relates to the use of a wood extract as a plasticizer in a composition comprising a mineral binder, the composition comprising the wood extract and the mineral binder, and a plasticizer admixture.

### Background of the invention

Wood is a complex natural material comprising cellulose, hemicellulose and lignin as main components. Wood also comprises minor amounts of minerals and so-called extractives such as resins, waxes and fatty acids. Fiberboards are wood products made of wood fibers. Fiberboard industry is divided into segments like particle board, medium-density fiberboard (MDF board) and hardboard. The production of fiberboards generally includes pulping of wood chips, drying, optionally blending the fibers with binder resins, forming the fibers optionally containing binder resin into a mat and hot pressing.

The aim of pulping is to convert wood chips to fibers. Pulping usually includes a pretreatment of wood chips for softening (digesting) and mostly mechanical action (refining). The steps of digesting and/or refining generally involve a treatment of the wood chips with hot water or steam, usually under pressurized conditions. The water used for the treatment is often recirculated several times in the process. By this treatment wood ingredients are extracted into the water or steam. The extracted wood ingredients or degradation products thereof also include organic acids such as acetic acid. Hydrolysis reactions occur during this treatment, which are catalyzed by the acids present. Finally, the water is separated from the fibers obtained which are then processed further to prepare fiberboards.

The water separated is an aqueous wood extract comprising a complex mixture of wood ingredients and degradation products thereof such as e.g. hemicellulosic compounds including sugars, cellulose, lignin, resins, waxes, acetic acid and furfural. Water is usually partially removed to achieve a more concentrated aqueous wood extract. The wood extract is often disposed as waste material or used for energy recovery by incineration. More suitable uses for the wood extracts are considered such as recovery of valuable chemical substances by fractionation or use as a raw material for biofuels. However, there is still a need for appropriate potential uses for such wood extracts generated in fiberboard production.

Cement, clay, gypsum and other mineral binders are widely used in construction applications. These mineral binders, in particular cement, are usually used as the binder in concretes or mortars typically also including aggregates and/or admixtures. For use, the composition comprising the mineral binder is mixed with water and the mixture is placed and formed as desired. In the mixture a physical or chemical reaction of the mineral binder and water takes place, resulting in hardening of the mixture so that a solid building material is formed.

Plasticizers or dispersants are often used in such compositions comprising mineral binders to increase workability of the composition. Thus, plasticizers can increase plasticity or fluidity of the mixture of the mineral binder and water while in a plastic state. For this reason, the amount of water in the mixture can be reduced which is advantageous because it results in improved strength of the product obtained. Therefore, plasticizers are also called water reducers.

Examples of conventional plasticizers for mineral binders are lignin sulfonates, sulfonated naphthalene formaldehyde condensates, sulfonated melamine formaldehyde condensates, and polycarboxylate ethers, and blends thereof. Sulfonated naphthalene formaldehyde condensates, sulfonated melamine formaldehyde condensates, and polycarboxylate ethers are also called superplasticizers.

However, known plasticizers have limitations in performance, costs or availability. Therefore, there is still a need for alternatives of conventional plasticizers for mineral binders.

### Summary of the invention

The object of the present invention is to provide a novel plasticizer for compositions comprising mineral binders, in particular concretes, to overcome the disadvantages of the prior art discussed above. In particular, the novel plasticizer should have plasticizing properties which are comparable to those of known plasticizers. Moreover, it should be economically priced and should not impose too severe restriction in view of national regulations such as REACH, a European regulation for registration, evaluation and authorization of chemicals.

Surprisingly, this object could be achieved by using a wood extract obtainable by water and/or steam extraction, for instance corresponding wood extracts generated during fiberboard production, as a plasticizer in a composition comprising a mineral binder.

Accordingly, the present invention relates to the use of a wood extract obtainable by water and/or steam extraction as a plasticizer for a composition comprising a mineral binder, and to the corresponding composition comprising a mineral binder and a wood extract obtainable by water and/or steam extraction as a plasticizer.

Use of the wood extract in a composition comprising a mineral binder results in a good plasticizing effect by the wood extract which is comparable to or even better than the plasticizing effect of conventional plasticizers. Selected properties such as initial consistency, decrease of consistency over time and, especially in case of summer temperatures, too early setting and temperature development of the hardening mineral binder can be improved by incorporation of the wood extract. The wood extract is relative inexpensive so that final product costs are reduced. In addition, the wood extract is not classified as a chemical raw material so that a REACH registration is not required.

In a preferred embodiment the wood extract can replace a significant part of a conventional plasticizer thereby improving selected properties such as initial plasticizing, slump-keeping over time (increased duration of workability) and retarded setting. In this case the wood extract is used as a plasticizer in combination with a conventional plasticizer in the composition comprising a mineral binder.

Compared to the use of a conventional plasticizer, the use of the wood extract as a plasticizer, in particular when using it in admixture with another conventional plasticizer, results in equal or better plasticizing effect, consistency is maintained and concrete stiffening and setting is retarded. These effects lead to cheaper and more efficient plasticizers, in particular for concrete, especially for use during summer time.

The invention will be described in detail in the following, wherein all statements equally apply to the use of the wood extract as a plasticizer, to the composition comprising the wood extract as a plasticizer, and the plasticizer admixture.

### Detailed description of the invention

A plasticizer is an additive which is used in a composition comprising a mineral binder to improve workability or fluidity of the mixture of the composition with water while being in the plastic state compared to the same mixture without such plasticizer. Plasticizers are also called water reducers or dispersants.

According to the present invention, a wood extract obtainable by water and/or steam extraction is used as a plasticizer in a composition comprising a mineral binder. The extraction treatment may be either water or steam extraction. It is also possible that the wood extract is obtained from sequential steam and water extractions, e.g. resulting from sequential digesting and refining steps for pulping in fiberboard production.

Wood extracts obtained as a by-product of fiberboard production are suitable for the present invention. Such wood extracts are known by the skilled person, in particular to those in the field of fiberboard production. Wood extracts are also commercially available.

The wood can be of any kind of wood or a mixture of different kinds of wood. The wood may be hardwood or softwood.

The wood extract is obtained by water and/or steam extraction of wood. The wood which is treated with water and/or steam is usually present in form of comminuted wood such as wood chips, sawdust or other wood waste, wherein wood chips are preferred. Steam as used herein means water steam. The water or steam extraction includes the treatment of wood, such as wood chips, sawdust or other wood waste, preferably wood chips, with water, preferably hot water, or steam, wherein the extraction is preferably carried under pressurized conditions, i.e. under a pressure of more than 1 bar.

The extraction is preferably effected at increased temperatures, i.e. a hot water extraction, and steam extraction including steam explosion are preferred. Such treatment of wood with hot water or steam is typically used in the digesting and/or refining step for pulping of wood chips in the fiberboard production as explained above. A specific steam treatment often used in fiberboard production is the so called steam explosion. Steam explosion refers to a method where high pressurized steam is injected into a reactor filled with wood such as wood chips or saw dust. During steam injection, the temperature rises, e.g. to 160 to 260°C. Subsequently, pressure is suddenly reduced and the wood undergoes an explosive decompression with degradation of hemicellulose and lignin matrix disruption as a result.

The wood extract is preferably obtainable by water and/or steam extraction at an elevated temperature, e.g. at a temperature of at least 100°C, preferably at a temperature of 120°C to 300°C, preferably 140°C to 260°C, more preferably 150°C to 200°C.

The wood extract is preferably obtainable by water and/or steam extraction under pressurized conditions, i.e. at a pressure of more than 1 bar, e.g. at a pressure of 2 bar to 250 bar, preferably 4 bar to 150 bar, more preferably 5 bar to 20 bar, in particular in combination with the temperature ranges indicated above.

The water or steam extraction can be carried out in a batchwise or continuous manner. The water or steam extraction can be carried out in a cooker such as a pressurized cooker, e.g. a water or steam cooker, for instance in a digester or refiner used in fiberboard production. The water used can be recirculated. In this manner less water is required and a more concentrated wood extract is obtained. The weight ratio of water used for extraction to wood may vary in wide ranges, e.g. from 1/1 to 10/1, but as mentioned the water/steam is often recirculated. The weight of wood refers to the dry weight.

The duration of water or steam extraction may vary in wide ranges depending on the wood used and the conditions applied. The water or steam extraction of the wood at the intended temperature may be carried out e.g. over a period of 1 min to 150 min, preferably 10 min to 100 min. Prior to this extraction at the intended temperature, a preheating of the mixture of the wood and water may be effected to arrive at the temperature intended.

By the water or steam extraction a main part or all of the hemicellulose (e.g. 80-100%), usually a proportion of lignin (e.g. 5 to 60%) and optionally a minor part of the cellulose (e.g. 0 to 25%) are extracted from the wood. The extracted hemicellulose is mainly degraded by hydrolysis reactions. Degradation products are sugars, in particular monomeric sugars, such as pentoses and hexoses, acetic acid and optional furans such as furfural. Cellulose is usually more resistant to hydrolysis, but some degradation may also occur. Further wood ingredients which may be extracted, usually in minor amounts, are resins, fatty acids, minerals and/or waxes.

Accordingly, the wood extract usually comprises sugars, in particular monomeric sugars such as pentoses and hexoses, lignin, acetic acid and optionally cellulose or degradation products thereof, and optionally starch. The wood extract may also contain minor amounts of other wood ingredients such as resins, waxes, fatty acids and/or minerals such as sodium, potassium, calcium and magnesium ions.

The wood extract is usually used in form of a mixture of the wood extract and water. The water content of the wood extract can be adjusted, e.g. by addition or usually by removal of water. It is possible to remove the complete water so that a water-free wood extract is obtained. Generally, however, it is preferred to use an aqueous solution or mixture of the wood extract, e.g. in view of viscosity and stability. Therefore, an aqueous wood extract containing 20 to 80 % by weight, preferably 40 to 60 % by weight, more preferably 45 to 55 % by weight of wood extract, the balance being water, is preferred. In most cases the water content of the wood extract has to be increased to the preferred concentration level, e.g. those mentioned above such as 40 to 60 % by weight, using evaporators. Standard evaporators developing temperatures above +100°C may be used as well as underpressure evaporators at temperatures below +100°C may be used.

The aqueous wood extract usually has a yellow to brown color. The aqueous wood extract is generally acidic, preferably with a pH value of not more than 6, e.g. with a pH value in the range of 3.5 to 5.5.

The water used for water and/or steam extraction is preferably pure potable water, i.e. the water or potable water is preferably used without adding any further components. It is possible that the water contains one or more auxiliary agents such as an acid, in particular a weak acid, or a base in order to support hydrolysis by acidic or alkaline catalysis. The addition of auxiliary agents is however not preferred.

According to the invention, the wood extract is used as a plasticizer in a composition comprising a mineral binder. A mineral binder is a substantially inorganic material or blend which hardens when mixed with water. All mineral binders known to those skilled in the art are suitable. Typical examples of suitable mineral binders are cement, building limes, clay, gypsum, and mixtures thereof. The mineral binder is preferably at least one of cement, clay and gypsum, wherein cement is preferred.

The gypsum used as mineral binder refers to burnt gypsum or calcined gypsum in which a part or all of the hydrate water contained in the dihydrate of gypsum is removed, such as plaster of Paris or hemihydrate and anhydrite or mixtures thereof. When the gypsum is mixed with water, the dihydrate of gypsum is formed again. As to gypsum, the use of the wood extract is particularly suitable when the gypsum is used for manufacture of gypsum wallboards.

Clay is widely used as a mineral binder. When it is mixed with water, a plastic material is obtained. The clay solidifies or hardens during drying, i.e. removal of the water.

The mineral binder is preferably a cement, for instance a Portland cement or alumina cement. The cement is preferably a Portland cement or a blend of Portland cement with at least one of fly ash, granulated blast furnace slag, lime, such as limestone and quicklime, fumed silica and pozzolana. Cements usually comprise in addition calcium sulfate, such as gypsum, anhydrite and/or hemihydrate.

Cements can be classified based on the composition according to standards such as the European cement standard EN 197-1 or corresponding other national standards. Common cements are Portland cements, Portland-composite cements, blastfurnace cements, puzzolanic cements and composite cements. Selected materials normally added to clinker to produce blended cements, e.g. fly ashes, blast furnace slags or silicafumes, are also called "additives" and may be added separately to the cement.

When cement is mixed with water a chemical reaction occurs between the cement and water called hydration. The hydration results in hardening or curing of the mixture of cement and water.

The composition comprising a mineral binder may be a composition consisting of the mineral binder. The composition comprising a mineral binder may preferably comprise in addition one or more admixtures and/or aggregates.

Typical examples of common admixtures for mineral binders or cement additives, respectively, are grinding aids, accelerators, corrosion inhibitors, retardants and shrinkage reducing agents. These admixtures are common and well known in the field of cement industry.

Typical examples of aggregates are sand, gravel, crushed stone and quartz powder.

The composition comprising a mineral binder is preferably a mortar or more preferably a concrete, wherein the mineral binder is preferably at least one of cement, clay and gypsum, more preferably cement. Mortars and concretes include aggregates and optionally additives and admixtures. Mortars include small sized aggregates such as sand or quartz powder whereas concretes in addition to small sized aggregates such as sand or quartz powder also include coarser aggregates such as gravel or crushed stone. Typically, a composition comprising a mineral binder and aggregates having a grain size of at most 4 mm or at most 2 mm, depending on country, are considered a mortar, whereas a composition comprising a mineral binder and aggregates wherein a part of the aggregates have a grain size of more than 4 mm or more than 2 mm, respectively, are considered a concrete.

In a preferred embodiment the wood extract is used in the composition in admixture with at least one other plasticizer selected from lignin sulfonates, sulfonated naphthalene formaldehyde condensates, sulfonated melamine formaldehyde condensates, and polycarboxylate ethers, preferably at least one of lignin sulfonates, sulfonated naphthalene formaldehyde condensates and sulfonated melamine formaldehyde condensates, and more preferably in admixture with lignin sulfonate and/or sulfonated naphthalene formaldehyde condensates.

The other plasticizer, in particular lignin sulfonate and/or sulfonated naphthalene formaldehyde condensates, may be e.g. sodium salt, calcium salt or magnesium salt or a mixture thereof. The other plasticizer, in particular lignin sulfonate and/or sulfonated naphthalene formaldehyde condensates, may also be in a modified form. Such common modification may e.g. include purification, e.g. to reduce the sugar content, partial desulfonation or modification of average molecular weight.

When the wood extract is used in admixture with at least one other plasticizer selected from lignin sulfonates, sulfonated naphthalene formaldehyde condensates, sulfonated melamine formaldehyde condensates, and polycarboxylate ethers, preferably at least one of lignin sulfonates, sulfonated naphthalene formaldehyde condensates and sulfonated melamine formaldehyde condensates, and more preferably in admixture with lignin sulfonate and/or sulfonated naphthalene formaldehyde condensate, the proportion of the wood extract is preferably from 1 % by weight to 50% by weight, preferably from 25% by weight to 35% by weight, based on the total dry weight of the wood extract and the at least one other plasticizer.

The total amount of the wood extract and optionally the at least one other plasticizer, preferably the total amount of the wood extract in admixture with lignin sulfonate and/or sulfonated naphthalene formaldehyde condensate, used in the composition of the invention may vary in wide ranges but is preferably from 0.035% by weight to 1.75% by weight, preferably from 0.14% by weight to 0.7% by weight, based on the dry weight of the mineral binder. The total amount of the wood extract and optionally the at least one other plasticizer refers to the dry weight, i.e. without water.

The wood extract and optionally the at least one other plasticizer are preferably used as an aqueous admixture. The aqueous admixture comprising the wood extract and optionally the at least one other plasticizer, preferably comprising a mixture of the wood extract with lignin sulfonate and/or sulfonated naphthalene formaldehyde condensate, is preferably used in an amount of from 0.1 % by weight to 5% by weight, preferably from 0.4% by weight to 2.0% by weight, based on the dry weight of the mineral binder. This is particularly preferred for a preferred aqueous plasticizer admixture comprising the wood extract and optionally the at least one other plasticizer, preferably comprising a mixture of the wood extract with lignin sulfonate and/or sulfonated naphthalene formaldehyde condensate, which has a total dry matter content of 25 to 45% by weight, in particular about 35% by weight.

The composition may further comprise other common admixtures such as grinding aids, accelerators, corrosion inhibitors, retardants and shrinkage reducing agents and mixtures thereof. Suitable raw materials which can be added, are for instance carbohydrates, inorganic salts and aminoalcohols. Examples of inorganic salts are nitrates, nitrites, sulfates, carbonates or chlorides of alkali metals or earth alkaline metals such as sodium or calcium.

The wood extract can be added to the composition in pure form, but it is preferably added as an aqueous liquid as mentioned above. The wood extract, preferably the aqueous wood extract, can be added to the composition at any suitable time. For instance, it may be added to the mineral binder in any order with any other optional further additives and/or aggregates to prepare the composition. The wood extract, in particular the aqueous wood extract, may also be added to the composition comprising the mineral binder together with or shortly after the admixture of the water. In this case it may be suitable to add it together with the tempering water or as a part of the tempering water.

As is known to those skilled in the art, the raw materials of a mineral binder such as cement are grinded, typically in a mill, to prepare the mineral binder. It is therefore also possible to add the wood extract, in particular the aqueous wood extract, before and/or during grinding the raw materials of the mineral binder to prepare the mineral binder, in particular the cement, as an interground additive. In this case, the wood extract is already contained in the so-called dry mixture.

For the preferred embodiment, where the wood extract is used in admixture with at least one other plasticizer, the wood extract and the at least one other plasticizer can be added to the composition separately at the same time or at different times to the composition. It is however preferred that the wood extract and at least one other plasticizer are mixed together and to add the plasticizer admixture to the composition comprising the mineral binder.

Therefore, the invention also relates to a plasticizer admixture for a composition comprising a mineral binder, the plasticizer admixture comprising a wood extract obtainable by water and/or steam extraction and at least one other plasticizer selected from lignin sulfonates, sulfonated naphthalene formaldehyde condensates, sulfonated melamine formaldehyde condensates, and polycarboxylate ethers, preferably selected from at least one of lignin sulfonates, sulfonated naphthalene formaldehyde condensates and sulfonated melamine formaldehyde condensates, and more preferably lignin sulfonate and/or sulfonated naphthalene formaldehyde condensates. As indicated above, in the plasticizer admixture the proportion of the wood extract is preferably from 1 % by weight to 50% by weight, preferably from 25% by weight to 35% by weight, based on the total dry weight of the wood extract and the at least one other plasticizer, preferably lignin sulfonate and/or sulfonated naphthalene formaldehyde condensates.

The plasticizer admixture is preferably an aqueous plasticizer admixture. The dry weight of the wood extract in the aqueous plastizicer admixture is e.g. from 0.35 to 17.5% by weight, preferably from 8.75 to 12.25 % by weight. This is particularly preferred for a preferred aqueous plasticizer admixture which has a total dry matter content of 25 to 45% by weight, in particular about 35% by weight.

The plasticizer admixture may comprise further additives such as antifoaming agents or preservatives, e.g. biocides. Said additives are usually contained in relatively small amounts. The total amount of said further additives may be e.g. less than 5 % by weight, preferably less than 2 % by weight, based on the total weight of the plasticizer admixture, preferably aqueous plasticizer admixture.

When the composition comprising the mineral binder and the wood extract used as plasticizer according to the invention is mixed with water. The wood extract improves workability or fluidity of the composition mixed with water, usually fresh mortar or fresh concrete, compared to the same composition but which does not contain the wood extract. Mixing of the composition with water is effected by conventional methods with which the skilled person is familiar.

Next, the invention is further explained by examples. However, the examples are for illustration only, and shall not be considered as limiting the scope of the invention.

### Examples

In the following, amounts and percentages are based on weight unless otherwise indicated.

### Measuring methods

Slump in time was determined according to EN 12350-2 (slump method), refers to water reduction and retention of consistency. Initial and final density was determined according to EN 12350-6. Air content (initial air and final air) in fresh concrete was determined according to EN 12350-7. Initial and final temperature was determined using electronic laboratory thermometer. Compressive strength of concrete was determined according to EN 12390-3.

### Wood extract

The wood extract used in the examples is a wood extract obtained from a steam extraction of pine wood chips at a temperature of 170°C and 12 bar, wherein the water is recirculated. The extract obtained is concentrated by water removal in an underpressure evaporator at temperatures of approximately +80°C to obtain an aqueous wood extract. The product obtained is a dense viscous brown liquid having a pH of about 4.2 to 5.2. The dry content is about 50 % by weight, the balance being water. The main components are monosaccharides, in particular pentoses and hexoses (about 40% by weight based on the dry weight). Further components are lignin, cellulose and/or degradation products thereof, starch, acetic acid, resins, waxes and minerals, in particular sodium, potassium, calcium and magnesium ions. The wood extract is commercially available as Fibro-Lep^{®} from Fibris S.A., Poland.

### Plasticizer admixtures

Two commercial plasticizers admixtures (PL) were used as a control:
PL1: BV1, Sika Germany, aqueous liquid based on ligninsulfonate
PL5: Plastiment BV40, Sika Czech Republic, aqueous liquid based on modified ligninsulfonate

Three inventive plasticizers admixtures having the composition indicated in the following Table 1 were prepared. The proportions of the components are given in % by weight, based on the total weight of the plasticizer. The wood extract used is the wood extract mentioned above. In PL2 and PL3 the wood extract (dry weight) is contained in an amount of 10 % by weight.

**Table 1**

| | PL2 | PL3 | PL4 |
|---|---|---|---|
| ligninsulfonate (55% in water)* | 45.2 | - | - |
| sulfonated naphthalene formaldehyde condensate (40% in water)** | - | 62.5 | - |
| wood extract (50% in water)*** | 20.0 | 20.0 | 100 |
| antifoaming agent | <1 | <1 | - |
| Biocide | <1 | <1 | - |
| additional water | balance | balance | - |

| | | | |
|---|---|---|---|
| * Collex 55 S, Chemische Werke Zell-Wildshausen GmbH, Germany ** Rokita BG 97, PCC Rokita SA, Poland *** Fibro-Lep^{®}, Fibris S.A., Poland | | | |

### Examples 1 to 9

Three different cement types (CM) were tested:
- CM1:: Cement CEM I 42,5 R of PC1 and fly ash and limestone in a weight ratio of 200/80/60 where PC1 is Portland cement from cement plant in Ladce, Slovakia
- CM2:: Cement CEM I 42,5 R of PC2 and fly ash and limestone in a weight ratio of 200/80/60 where PC2 is Portland cement from cement plant in Mokrá, Czech Republic, Heidelberg Cement Group
- CM3:: Cement CEM I of PC3 and fly ash in a weight ratio of 220/80 where PC3 is Portland cement from cement plant in Radotin, Czech Republic

The plasticizer admixtures and the cements were used to prepare standard concretes according to EN 480-1 (concrete class C 16/20 X0) according to the details given in Table 2 below and the properties of the concretes obtained are determined. As the consistency method the Abrams method was used. The results are given in Table 3 with respect to the fresh concrete properties and Table 4 with respect to the hardened concrete properties.

In examples 1 to 6, the total amount of the aqueous plasticizer admixture used was 0.65 % by weight, based on the dry weight of the cement content. In examples 7 to 9, the total amount of the aqueous plasticizer admixture used was 0.70 % by weight, based on the dry weight of the cement content.

In Table 2, admixture dosage/m³ refers to kg aqueous plasticizer admixture per m³ concrete; Dmax refers to maximum grain size of the aggregates, w/b refers to the water/cement ratio where the binder activity is considered. For instance, for Examples 1-3, the value of 0.91 is based on 210 kg water dividided by (200 kg cement + 80*0.4 fly ash).The coefficient 0.4 considers the lower activity of the fly ash compared to the cement. The values in parenthesis for w/b refers to water to total fines ratio. For instance, the value of 0.62 for Examples 1-3, is based on weight of water (210 kg) divided by the weight of the cement mixture (200 kg + 80 kg + 60 kg). Water (kg) refers to kg water per m³ of concrete.

**Table 2**

| | Plasticizer admixture | Cement type | Admixture dosage/m³ | Dmax (mm) | w/b | Water (kg/m³ concrete) |
|---|---|---|---|---|---|---|
| Ex. 1* | PL1 | CM1 | 1.51 | 22 | 0.91 (0.62) | 210 |
| Ex. 2 | PL2 | CM1 | 1.51 | 22 | 0.91 (0.62) | 210 |
| Ex. 3 | PL3 | CM1 | 1.51 | 22 | 0.91 (0.62) | 210 |
| Ex. 4* | PL1 | CM2 | 1.98 | 16 | 0.95 (0.63) | 210 |
| Ex. 5 | PL2 | CM2 | 1.98 | 16 | 0.95 (0.63) | 210 |
| Ex. 6 | PL3 | CM2 | 1.98 | 16 | 0.95 (0.63) | 210 |
| Ex. 7* | PL5 | CM3 | 1.76 | 16 | 0.79 | 200 |
| Ex. 8 | PL4 | CM3 | 1.76 | 16 | 0.79 | 200 |
| Ex. 9 | PL3 | CM3 | 1.76 | 16 | 0.79 | 200 |

| | | | | | | |
|---|---|---|---|---|---|---|
| * Control examples | | | | | | |

**Table 3**

| | Slump in time | | | | Initial density | Final density | Initial air | Final air | Initial temp. | Final temp. |
|---|---|---|---|---|---|---|---|---|---|---|
| | 10 min | 60 min | 90 min | 120 min | (kg.m⁻³) | (kg.m⁻³) | (%) | (%) | (°C) | (°C) |
| Ex.1* | 190 | 160 | 125 | 100 | 2,340 | 2,350 | 1.4 | 1.5 | 18.3 | 20.1 |
| Ex. 2 | 200 | 165 | 135 | 120 | 2,330 | 2,325 | 1.6 | 2.0 | 17.8 | 20.3 |
| Ex. 3 | 200 | 180 | 135 | 140 | 2,315 | 2,320 | 1.5 | 1.8 | 17.5 | 19.9 |
| | | | | | | | | | | |
| Ex. 4* | 130 | 80 | - | - | 2,285 | 2,325 | 2.9 | 2.7 | 17.9 | 19.4 |
| Ex. 5 | 140 | 110 | - | - | 2,300 | 2,365 | 3.0 | 4.0 | 17.9 | 19.3 |
| Ex. 6 | 150 | 70 | - | - | 2,315 | 2,290 | 2.4 | 2.8 | 17.9 | 19.8 |
| | | | | | | | | | | |
| Ex. 7* | 210 | 190 | 155 | - | 2,270 | 2,285 | 2.3 | 2.2 | 22.4 | 23.2 |
| Ex. 8 | 205 | 205 | 200 | - | 2,240 | 2,105 | 3.5 | 9.0 | 22.9 | 23.2 |
| Ex. 9 | 200 | 180 | 145 | - | 2,270 | 2,260 | 2.6 | 4.4 | 23.2 | 23.8 |

| | | | | | | | | | | |
|---|---|---|---|---|---|---|---|---|---|---|
| * Control examples | | | | | | | | | | |

**Table 4**

| | Compressive strength after | | | | |
|---|---|---|---|---|---|
| | 1 day | 2 days | 3 days | 7 days | 28 days |
| | (MPa) | (MPa) | (MPa) | (MPa) | (MPa) |
| Ex. 1* | 3.6 | 7.6 | 10.4 | 14.6 | 22.6 |
| Ex. 2 | 3.6 | 7.2 | 9.7 | 15.2 | 21.9 |
| Ex. 3 | 3.5 | 7.3 | 10.3 | 14.2 | 21.4 |
| | | | | | |
| Ex. 4* | 5.2 | 10.5 | 13.8 | 20.6 | 36.1 |
| Ex. 5 | 4.6 | 9.7 | 12.8 | 19.9 | 32.8 |
| Ex. 6 | 5.7 | 10.9 | 13.7 | 20.3 | 34.9 |
| | | | | | |
| Ex. 7* | 4.5 | 10.5 | 11.5 | 15.4 | 21.4 |
| Ex. 8 | 1.8 | 5.5 | 5.9 | 8.1 | 10.7 |
| Ex. 9 | 4.8 | 8.9 | 10.9 | 14.8 | 19.7 |

| | | | | | |
|---|---|---|---|---|---|
| * Control examples | | | | | |

### Testing according to EN 934-2

Plasticizer admixtures PL2 and PL3 were tested according to EN934-2: 2009 (Water reducing admixture and retarding/water reducing admixture). As standard concrete concrete I according to PN-EN 480-1:2008 was used for parameters P1, P2 and P3 mentioned below. For parameter P4 a reference mortar according to PN-EN 480-1:2008 was used. The standard concrete/mortar was processed with the plasticizer admixture (test mix) and without the plasticizer admixture (reference mix). A w/c ratio of 0.51 was used for reference mix. In the test mix the amount of aqueous plasticizer admixtures was 0.80% for PL2 and 1.50% for PL3, based on the cement weight. The results are shown in Tables 5 and 6. The following parameters P were determined:
- P1:: Gauging water reduction at the same consistency (%), test method: PN-EN 12350-2:2009, Reduction H₂O of test mix compared to reference mix
- P2:: Air content of the fresh mix at the same consistency (vol.%), test method: PN-EN 12350-7:2009
- P3: Compressive strength at the same consistency (MPa) after 7 days and after 28 days, test method PN-EN 12390-3:2009
- P4:: Setting times for initial setting (IS) and final setting (FS) (min), test method PN-EN 480-2:2008

**Table 5**

| | P1(%) | P2 (vol.%) | | P3 (MPa) | | | |
|---|---|---|---|---|---|---|---|
| | Reduction H₂O | Ref. mix | Test mix | Ref. mix CS 7 d | Test mix CS 7d | Ref. mix CS 28 d | Test mix CS 28d |
| PL2 | 7.5 | 2.0 | 2.5 | 44.20 | 53.13 | 51.35 | 58.80 |
| PL3 | 20 | 2.0 | 2.2 | 44.20 | 64.18 | 51.35 | 73.46 |

The enhancement of compressive strength after 7 days by PL2 and PL3 was 120% and 145.2%, respectively. The enhancement of compressive strength after 28 days by PL2 and PL3 was 114.5% and 143.1%, respectively.

**Table 6**

| | P4 (min) | | | |
|---|---|---|---|---|
| | Ref. mix IS | Test mix IS | Ref. mix FS | Test mix FS |
| PL2 | 225 | 495 | 285 | 635 |
| PL3 | 225 | 570 | 285 | 630 |

As is shown in Tables 5 and 6, the plasticizer admixtures PL2 and PL3 fulfill the requirements for parameters P1 to P4 according EN-934-2. All other parameters mentioned in EN-934-2 were also tested for PL2 and PL3 and it was confirmed that PL2 and PL3 satisfy all requirements listed in EN-934-2.

## Claims

1. Use of a wood extract obtainable by water and/or steam extraction as a plasticizer for a composition comprising a mineral binder.

2. Use according to claim 1, wherein the mineral binder is at least one of cement, clay and gypsum, preferably cement, wherein the composition is preferably a mortar or a concrete.

3. Use according to claim 1 or claim 2, wherein the wood extract is used in admixture with at least one other plasticizer selected from lignin sulfonates, sulfonated naphthalene formaldehyde condensates, sulfonated melamine formaldehyde condensates, and polycarboxylate ethers, preferably lignin sulfonates and/or sulfonated naphthalene formaldehyde condensates.

4. Use according to claim 3, wherein the proportion of the wood extract is from 1 % by weight to 50% by weight, preferably from 25% by weight to 35% by weight, based on the total dry weight of the wood extract and the at least one other plasticizer.

5. Use according to any one of claims 1 to 4, wherein the total amount (dry weight) of the wood extract and optionally the at least one other plasticizer is from 0.035% by weight to 1.75% by weight, preferably from 0.14% by weight to 0.7% by weight, based on the dry weight of the mineral binder, and/or the wood extract and optionally the at least one other plasticizer are used as an aqueous admixture for the composition, wherein the aqueous admixture comprising the wood extract and optionally the at least one other plasticizer is preferably used in an amount of from 0.1 % by weight to 5% by weight, preferably from 0.4% by weight to 2.0% by weight, based on the dry weight of the mineral binder.

6. Use according to any one of claims 1 to 5, wherein the wood extract is obtainable by water and/or steam extraction at a temperature of 120°C to 300°C, preferably 140°C to 260°C, wherein the extraction is preferably carried out under pressurized conditions, and/or wherein the wood extract is obtainable by water and/or steam extraction at a pressure of 2 bar to 250 bar, preferably 4 bar to 150 bar.

7. Use according to any one of claims 1 to 6, wherein the wood extract in final liquid form is adjusted using evaporators, including underpressure evaporators, to adjust the water content.

8. A composition comprising a mineral binder and a wood extract obtainable by water and/or steam extraction as a plasticizer.

9. The composition according to claim 8, wherein the mineral binder is at least one of cement, clay and gypsum, preferably cement, wherein the composition is preferably a mortar or a concrete.

10. The composition according to claim 8 or claim 9, wherein the composition further comprises at least one other plasticizer selected from lignin sulfonates, sulfonated naphthalene formaldehyde condensates, sulfonated melamine formaldehyde condensates, and polycarboxylate ethers, preferably lignin sulfonate and/or sulfonated naphthalene formaldehyde condensate.

11. The composition according to claim 10, wherein the proportion of the wood extract is from 1 % by weight to 50% by weight, preferably from 25% by weight to 35% by weight, based on the total dry weight of the wood extract and the at least one other plasticizer.

12. The composition according to any one of claims 8 to 11, wherein the total amount (dry weight) of the wood extract and optionally the at least one other plasticizer is from 0.035% by weight to 1.75% by weight, preferably from 0.14% by weight to 0.7% by weight, based on the dry weight of the mineral binder, and/or the wood extract and optionally the at least one other plasticizer are used as an aqueous admixture for the composition, wherein the aqueous admixture comprising the wood extract and optionally the at least one other plasticizer is preferably used in an amount of from 0.1 % by weight to 5% by weight, preferably from 0.4% by weight to 2.0% by weight, based on the dry weight of the mineral binder.

13. The composition according to any one of claims 8 to 12, wherein the wood extract is obtainable by water and/or steam extraction according to claim 5 and/or claim 6 and/or claim 7.

14. A plasticizer admixture for a composition comprising a mineral binder, the plasticizer admixture comprising a wood extract obtainable by water and/or steam extraction and at least one other plasticizer selected from lignin sulfonates, sulfonated naphthalene formaldehyde condensates, sulfonated melamine formaldehyde condensates, and polycarboxylate ethers, preferably lignin sulfonates and/or sulfonated naphthalene formaldehyde condensates, wherein the plasticizer admixture is preferably an aqueous plasticizer admixture.

15. The plasticizer admixture according to claim 14, wherein the proportion of the wood extract is from 1 % by weight to 50% by weight, preferably from 25% by weight to 35% by weight, based on the total dry weight of the wood extract and the at least one other plasticizer, wherein the plasticizer admixture is preferably an aqueous plasticizer admixture, wherein the amount of wood extract (dry weight) is preferably from 0.35 to 17.5% by weight, preferably from 8.75 to 12.25% by weight, based on the total weight of the plasticizer admixture.
